Europäisches Patentamt

European Patent Office

Office européen des brevets

(11) Publication number: **0 091 211**
**B1**

(12) **EUROPEAN PATENT SPECIFICATION**

(45) Date of publication of patent specification: **30.05.90**

(21) Application number: **83301297.4**

(22) Date of filing: **09.03.83**

(51) Int. Cl.⁵: **G 05 G 25/00,** G 12 B 11/04,
B 25 B 9/00

(54) Adjusting apparatus.

(30) Priority: **02.04.82 US 364726**

(43) Date of publication of application:
**12.10.83 Bulletin 83/41**

(45) Publication of the grant of the patent:
**30.05.90 Bulletin 90/22**

(84) Designated Contracting States:
**CH DE FR GB LI NL**

(56) References cited:
**DE-A-2 344 621**
**GB-A- 735 582**
**US-A-1 525 128**
**US-A-2 293 085**
**US-A-3 577 787**

(73) Proprietor: **AMPEX CORPORATION**
**401 Broadway M.S. 3-35**
**Redwood City California 94063-3199 (US)**

(72) Inventor: **Ryan, Dennis M.**
**257 Clifford**
**Redwood City California (US)**

(74) Representative: **Horton, Andrew Robert Grant
et al**
**BOWLES HORTON Felden House Dower Mews
High Street**
**Berkhamsted Hertfordshire HP4 2BL (GB)**

## Description

This invention relates to adjusting apparatus and particularly to such apparatus adapted for one-handed operation.

One context in which the present invention would be used is in conjunction with a tape transport which, as described in EP-A-91210 has a magnetic tape tensioning arm that is springloaded to apply tensioning forces to a tape. One end of the spring could be secured to the arm and the other to an adjustable member disposed for motion relative to a support such as a mounting plate of the tape transport machine. The member may be mounted for pivoting sliding motion on the plate or, alternatively, for rectilinear sliding motion. It would be important to adjust the position of the member relative to the mounting plate while the machine is operating in order to obtain precisely the correct spring distortion and resulting tape tension that is desired. To do this the mechanic-operator must hold and operate with one hand a tension sensing tool attached to the spring or to the tape tensioning arm, and it is therefore desirable that he be able to make the bracket adjustment with his other hand alone; otherwise two operators would be required.

It would be preferable to secure the adjustable member to the mounting plate by means of, for example, at least one clamping screw or bolt, which may be loosened to permit adjustment and then tightened when the adjustment has been completed. However, if the operator releases the adjusting tool to tighten the bolt, the adjusted position might be lost before the bolt could be tightened.

Accordingly it is an object of the present invention to provide an adjusting tool which is adapted for one-handed operation and which can provide at least a temporary clamp for an adjusted position of the adjustable member until a further fixing or clamping means can be operated to secure the adjustable member in position.

It is known from US-A-1525128 published in 1925 to provide a mechanically operative combination comprising apparatus which includes a pair of elements having freedom of relative movement in a first plane, a first of said elements being relieved to define a reference bore adjacent an edge of the other and second element, said bore having an axis normal to the said plane and an adjusting tool which is intended in use for the relative positional adjustment of the pair of elements, the tool having a part adapted for insertion into and snug rotation in said bore and having a portion engaging said second element in substantially non-slip engagement, for causing said relative positional adjustment of said first and second elements upon rotation of said adjusting tool in said bore. A combination according to the invention is characterised in that the adjusting tool includes manually adjustable means for releasably securing said part against rotation in said bore.

Likewise, according to another aspect of the invention, a tool for effecting positional adjustment of apparatus comprising two relatively positionally adjustable members of which a first member has an engagement part and is movable for adjustment relative to the other member, which has an aperture adjacent the engagement part, the tool comprising a body of which a terminal part is insertable into and rotatable in the aperture, the body carrying an engagement means for engaging the said engagement part for positional adjustment of the members by rotation of the body of the tool, is characterised in that the tool is adapted to resiliently expand laterally to engage the aperture firmly by the wedging action of an actuating member which extends along said body and is movable against a bias to relieve the said wedging action.

A preferred embodiment of the invention is intended for adjustment of elements mounted for guided sliding relative motion in a first direction. In this embodiment, a cylindrical adjusting tool is fitted into a reference bore in one element and rotationally and non-slippably engaging an engagement part of the other element. A manually operable button on the tool may be depressed to remove a cam permitting adjustment rotation of the tool, or released to secure the tool in the bore while clamping means are operated to secure the two elements; the tool can then be removed. Substantially one-handed adjustment is thus possible leaving an operator's other hand free to operate other apparatus.

### Description of the drawing

Figure 1 is a fragmentary side elevation, partly in section, of a pair of elements and an adjusting tool in accordance with the present invention;

Figure 2 is a fragmentary plan view, to an enlarged scale of the apparatus shown in Figure 1; and

Figure 3 is a fragmentary plan view, to the scale of Figure 2, of another form of the elements to be adjusted.

### Description of the Preferred Embodiments

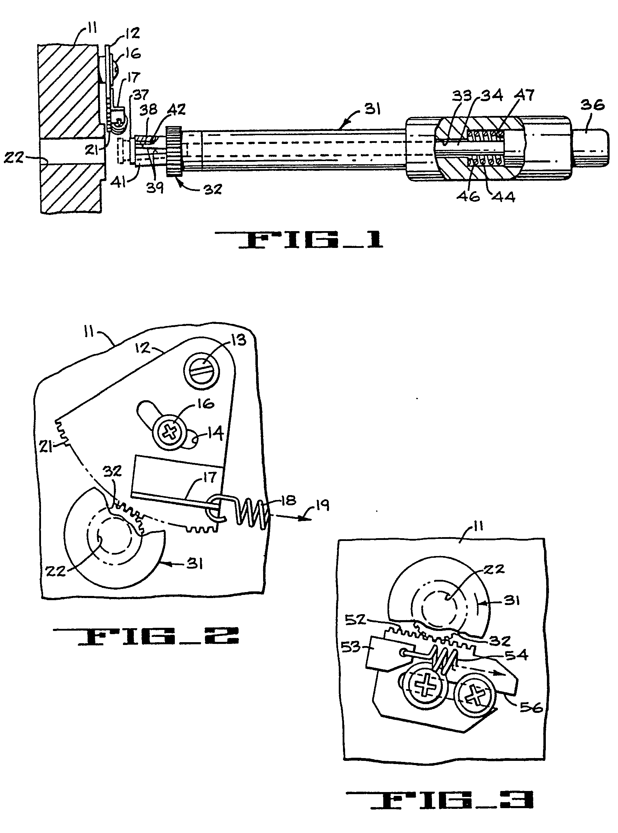

In Figures 1 and 2 of the drawing is shown a support comprising a mounting plate 11, to which an adjustable member comprising a bracket 12 is mounted for pivoting motion as by means of a pivot pin bolt 13. An arcuate slot 14 is formed in the bracket 12 and a fixing means comprising a clamping bolt 16 is threaded into the plate 11 and protrudes through slot 14. The bolt 16 may be loosened to permit adjustment of the bracket or tightened to clamp the bracket to the plate 11 in any of the rotational positions permitted by slot 14. A flange 17 is provided on the bracket for securing one end of a helical tension spring 18 which tends to pull the bracket in the direction of arrow 19. One edge of the bracket comprises an engagement part constituted by a row of evenly spaced gear teeth 21 formed in an arc centered on bolt 13. The plate 11 is formed with an aperture constituted by a reference bore 22 adjacent to the path of gear teeth 21.

To provide adjustment of the position of bracket 12 and a corresponding extension of and loading exerted by spring 18, adjusting tool 31 is inserted into bore 22, so that an engagement means comprising a toothed flange 32 engages the teeth 21 of the bracket. The clamp 16 is then loosened, and the element 31 is manually rotated until the desired adjustment is made. At this stage, it is desirable to tighten the clamping bolt 16 again, but for one one-handed operation, something more is needed to ensure that spring 18 will not cause the adjustment to be lost when the element 31 is manually released so that the operator's hand can grasp a tool for the bolt 16.

Accordingly, the element 31 is formed with a central bore 33 into which is fitted an elongated rod or shaft 34, which protrudes from a first end of the element 31 to define a manually operable button 36, and the shaft 34 likewise protrudes from the other (second) end of element 31 to define a flanged tip 37 easily insertable in bore 22. The bore 33 is enlarged at the second end to define a hollow conical cam-follower recess 38 opening divergingly outwardly toward the second end, and the corresponding portion of element 31 is slotted longitudinally as at 39 to permit resilient radial or lateral expansion of the end surface 41 to engage (in this embodiment frictionally) the interior wall of bore 22 so as to secure at least temporarily the bracket 12 when the adjustment is completed, but before bolt 16 has been tightened.

To urge such expansion, the portion 42 of shaft 34 is enlarged to define a conical cam surface or wedge mating with surface 39, and shaft 34 is biassed towards a position causing expansion of the terminal portion or surface 41 as by means of a coil compression spring 44 bearing against confronting shoulders 46 on the element 31 and 47 on the shaft 34.

Thus it will be seen that the button 36 must be depressed to permit insertion of the tool 31 and rotation thereof to adjust the bracket, but release of the button causes the surface 41 to expand and secure the tool in bore 22. All this can be done with a single hand. This hand may then be used to tighten bolt 16, following which the button may again be depressed and the tool removed.

Figure 3 illustrates a rectilinearly sliding form of bracket 51 having teeth 52 in a straight line, a flange 53 for securing a spring 54, and a rectilinear slot 56 through which a pair of clamping and guide bolts 58 and 59 may be threaded to mounting plate 11, which also has a reference bore 22 adjacent to teeth 52 for insertion of tool 31.

**Claims**

1. A mechanically operative combination comprising apparatus which includes a pair of elements having freedom of relative movement in a first direction, a first (11) of said elements being relieved to define a reference bore (22) adjacent an edge of the other and second element 12), said bore having an axis normal to a plane in which said first direction lies; and an adjusting tool (31) which is intended in use for the relative positional adjustment of the pair of elements, the tool having a part (37, 41) adapted for insertion into and snug rotation in said bore (22) and having a portion (32) engaging said second element in substantially non-slip engagement, for causing said relative positional adjustment of said first and second elements upon rotation of said adjusting tool in said bore; characterised in that the adjusting tool includes manually adjustable means (34, 42) for releasably securing said part (41) against rotation in said bore.

2. A combination according to claim 1, wherein said adjusting tool is of elongated right-circular cylindrical shape to define a manually rotatable shaft, and said portion (32) engageable with the second element is a co-axial flange extending radially from the shaft.

3. A combination according to claim 2 wherein said edge of said second element is formed with evenly spaced gear teeth (21) and said flange (32) is provided with an arcuate array of gear teeth meshing with the teeth of said second element to provide said non-slip engagement for causing said relative motion.

4. A combination according to claim 3 wherein said first and second elements have confronting planar faces and said bore is axially normal to said planar faces.

5. A combination according to claim 4 wherein said first direction is rectilinear and said edge of said second element is generally parallel thereto, and guide means (56, 58, 59) are provided for guiding said pair of elements in said first direction of relative motion.

6. A combination according to claim 4, wherein said first direction is arcuate and the said second element is mounted on said first element for pivoting motion relative thereto.

7. A combination according to claim 4, wherein one of said first and second elements has a slot (14) extending in said first direction, and a clamping bolt (16) is mounted in said slot and threaded into the other of said first and second elements to clamp said elements together when adjustment has been completed.

8. A combination according to claim 4, wherein said part of the adjusting tool comprises a cylindrical end portion (41) fitting for said snug rotation in said bore; said end portion is relieved to define a conically shaped hollow interior portion presenting an expansion cam-follower surface opening divergingly toward said end thereof; said end portion is longitudinally slotted to permit radial expansion thereof to frictionally engage the walls of said bore in said first element to provide said securing action thereof; and a conforming conical cam element (42) is provided in said hollow interior portion for causing said expansion of said end portions, said cam element being springloaded in the expansion-causing direction and being manually movable in the opposite direction for temporary radial collapse of said end portion to permit rotation in said bore.

9. A combination according to claim 8, wherein said adjusting tool defines a central bore (33) extending from said hollow conical-shaped interior portion to the other end of said adjusting element, and said cam element has an elongated shaft (34) extending to such central bore and protruding from said other end of said adjusting element to define a manually depressable button (36) for moving said cam element in said opposite direction to temporarily permit said rotation in said bore.

10. A combination according to claim 9, wherein said adjusting tool is also manually removable and insertable in said bore when said button is manually depressed.

11. A tool for effecting positional adjustment of apparatus comprising two relatively positionally adjustable members of which a first member (12) has an engagement part (21) and is movable for adjustment relative to the other member (11), which has an aperture (22) adjacent the engagement part, the tool (31) comprising a body of which a terminal part (41) is insertable into and rotatable in the aperture, the body carrying an engagement means (32) for engaging the said engagement part for positional adjustment of the members by rotation of the body of the tool, characterised in that the tool is adapted to resiliently expand laterally to engage the aperture firmly by the wedging action of an actuating member (34, 42) which extends along said body and is movable against a bias to relieve the said wedging action.

12. A tool according to claim 11 in which the body is hollow and the actuating member comprises a rod (34) extending inside the body.

13. A tool according to claim 11 or claim 12 in which the terminal part (39) is slotted to permit the lateral expansion thereof and the actuating member has a tapered portion (42) engaging the inside of the said terminal portion.

14. A tool according to any of claims 11 to 13 in which the actuating member terminates, remotely from the said terminal part, in an actuating button (36).

15. A tool according to any of claims 11 to 14 in which the bias is provided by a compression spring (44) between the actuating member and the body.

**Patentansprüche**

1. Mechanisch arbeitende Kombination mit einer Einrichtung.

die ein Paar von Elementen aufweist, welche in einer ersten Richtung einen Relativbewegungsfreiheitsgrad besitzen, von denen ein erstes Element (11) so bearbeitet ist, daß im Bereich eines Randes des anderen und zweiten Elementes (12) eine Referenzbohrung (22) definiert ist, deren Achse senkrecht auf der Ebene steht, in der die erste Richtung liegt; und mit einem Einstellwerkzeug (31), das zur relativen Positionseinstellung des Paars von Elementen dient und ein in die Bohrung (22) einsetzbares und bündig in dieser drehbares Teil (37, 41) sowie ein mit dem zweiten Element in im wesentlichen gleitfreien Eingriff tretende Teil (32) aufweist, um bei Drehung des Einstellwerkzeuges in der Bohrung die relative Positionseinstellung zu realisieren, dadurch gekennzeichnet, daß das Einstellwerkzeug manuell einstellbare Mittel (34, 42) zur lösbaren Sicherung des Teils (41) gegen Drehung in der Bohrung aufweist.

2. Kombination nach Anspruch 1, in der das Einstellwerkzeug zur Bildung einer manuell drehbaren Welle langgestreckte gerade Kreiszylinderform besitzt und das mit dem zweiten Element in Eingriff tretende Teil (32) ein radial von der Welle ausgehender koaxialer Flansch ist.

3. Kombination nach Anspruch 2, in welcher der Rand des zweiten Elementes mit gleichmäßig beabstandeten Getriebezähnen (21) und der Flansch (32) mit einer bogenförmigen Folge von mit den Zähnen des zweiten Elementes kämmenden Getriebezähnen versehen ist, um den schlupffreien Eingriff zur Auslösung der Relativbewegung zu realisieren.

4. Kombination nach Anspruch 3, in welcher das erste und zweite Element sich gegenüberstehende planare Flächen aufweisen und die Bohrung in Achsrichtung senkrecht auf den planaren Flächen steht.

5. Kombination nach Anspruch 4, in welcher die erste Richtung gradlinig ist und der Rand des zweiten Elementes generell paralle dazu verläuft und in welcher Mittel (56, 58, 59) zur Führung des Paars von Elementen in der ersten Richtung der Relativbewegung vorgesehen sind.

6. Kombination nach Anspruch 4, in welcher die erste Richtung bogenförmig und das zweite Element auf dem ersten Element zur Durchführung einer Relativschwenkbewegung montiert ist.

7. Kombination nach Anspruch 4, in welcher eines der beiden Elemente einen sich in der ersten Richtung erstreckenden Schlitz (14) aufweist und in dem Schlitz ein Klemmbolzen (16) vorgesehen und in das andere der beiden Elemente eingeschraubt ist, um nach Abschluß der Einstellung die Elemente aneinander zu klammern.

8. Kombination nach Anspruch 4, in welcher das Teil des Einstellwerkzeuges ein zur bündigen Drehung in die Bohrung eingepaßtes zylindrisches Endteil (41) ist; das Endteil so bearbeitet ist, daß ein konisch geformtes hohles Innenteil ausgebildet ist, das eine sich zu seinem Ende auseinandergehende Aufweitungs-Nockenfolger-Flächenöffnung darstellt; das Endteil zur Ermöglichung einer Aufweitung in Längsrichtung geschlitzt ist, um mit den Wänden der Bohrung im ersten Element zur Relaisierung der Sicherungswirkung in reibenden Eingriff zu treten; und im hohlen Innenteil ein angepaßtes konisches Nockenelement (42) zur Relaisierung der Aufweitung der Endteile vorgesehen ist, wobei das Nockenelement in der die Aufweitung bewirkenden Richtung federbelastet und in entgegengesetzter Richtung manuell bewegbar ist, um das Endteil zur Ermöglichung einer Drehung in der Bohrung zeitweise radial zusammengehen zu lassen.

9. Kombination nach Anspruch 8, in welcher das Einstellwerkzeug eine sich vom hohlen konisch geformten Innenteil zum anderen Ende des Einstellelementes erstreckende zentrale Bohrung (33) definiert und das Nockenelement eine sich zur zentralen Bohrung erstreckende und aus dem anderen Ende des Einstellelementes herausragende langgestreckte Welle (34) besitzt, um zur Bewegung des Nockenelementes in der entgegengesetzten Richtung zwecks zeitweiser Ermöglichung der Drehung in der Bohrung einen manuell drückbaren Knopf (36) zu definieren.

10. Kombination nach Anspruch 9, in welcher das Einstellwerkzeug bei manuell gedrücktem Knopf manuell aus der Bohrung entnehmbar und in diese einsetzbar ist.

11. Werkzeug zur Durchführung einer Positionseinstellung einer Einrichtung, welche zwei positionsmäßig relativ einstellbare Elemente aufweist, von denen ein erstes Element (12) ein Eingriffsteil (21) besitzt und zur Einstellung relativ zum anderen Element (11) bewegbar ist, das benachbart zum Eingriffsteil eine Öffnung (22) besitzt, wobei das Werkzeug (31) einen Körper mit einem in die Öffnung einsetzbaren und in dieser drehbaren Endteil (41) aufweist, der Eingriffsmittel (32) für das in Eingrifftreten mit dem Eingriffsteil für die Positionseinstellung der Elemente durch Drehung des Körpers des Werkzeuges trägt, dadurch gekennzeichnet, daß das Werkzeug federnd quer aufweitbar ist, um durch Keilwirkung eines Betätigungselementes (34, 42) fest in die Öffnung einzugreifen, wobei das Betätigungselement sich längs des Körpers erstreckt und gegen eine Vorspannung zur Lösung der Keilwirkung bewegbar ist.

12. Werkzeug nach Anspruch 11, bei dem der Körper hohl ausgebildet ist und das Betätigungselement einen sich innerhalb des Körpers erstreckenden Stab (34) umfaßt.

13. Werkzeug nach Anspruch 11 oder 12, bei dem das Endteil (39) zur Ermöglichung einer Queraufweitung geschlitzt ist und das Betätigungselement ein an der Innenseite des Endteils angreifendes abgeschrägtes Teil (42) besitzt.

14. Werkzeug nach den Ansprüchen 11 bis 13, bei dem das Betätigungselement entfernt vom Endteil in einem Betätigungsknopf (36) endet.

15. Werkzeug nach den Ansprüchen 11 bis 14, bei dem die Vorspannung durch eine Kompressionsfeder (44) zwischen dem Betätigungselement und dem Körper gebildet ist.

**Revendications**

1 Combinaison mécaniquement fonctionnelle comprenant un appareil qui comporte une paire d'éléments ayant une liberté de déplacement relatif dans une première direction, un premier (11) desdits éléments étant évidé pour définir un alésage de référence (22) adjacent à un bord de l'autre et second élément (12), ledit alésage comportant un axe perpendiculaire à un plan dans lequel se trouve ladite première direction, et un outil d'ajustement (31) qui est prévu pour être utilisé pour l'ajustement positionnel relatif de la paire d'éléments, l'outil comportant une partie (37, 41) prévue pour l'insertion dans et la rotation à frottement dans ledit alésage (22) et comporte une partie (32) engageant ledit second élément dans un engagement sensiblement non glissant pour provoquer ledit ajustement positionnel relatif desdits premier et second éléments lors de la rotation dudit outil d'ajustement dans ledit alésage, caractérisé en ce que l'outil d'ajustement comprend un moyen manuellement ajustable (34, 42) pur fixer de manière amovible ladite partie (41) par rapport à la rotation dans ledit alésage.

2. Combinaison selon la revendication 1, dans laquelle ledit outil d'ajustement est d'une forme cylindrique circulaire droite allongée pour définir un arbre manuellement tournant, et dans laquelle ladite partie (32) engageable avec le second élément est une bride coaxiale supportant radialement depuis l'arbre.

3. Combinaison selon la revendication 2, dans laquelle ledit bord dudit second élément est formé avec des dents d'engrenage espacées de manière égale (21), et dans laquelle ladite bride (32) est pourvue d'une rangée en forme d'arc des dents d'engrenage s'engrenant avec les dents dudit second élément pour fournir ledit engagement non glissant afin de provoquer ledit mouvement relatif.

4. Combinaison selon la revendication 3, dans laquelle lesdits premier et second éléments comportent des faces planaires opposées et dans laquelle ledit alésage est axialement perpendiculaire auxdites faces planaires.

5. Combinaison selon la revendication 4, dans laquelle ladite première direction est rectiligne et dans laquelle ledit bord dudit second élément est généralement parallèle à celle-ci, et dans laquelle des moyens de guidage (56, 58, 59) sont prévus pour le guidage de ladite paire d'éléments dans ladite première direction de mouvement relatif.

6. Combinaison selon la revendication 4, dans laquelle ladite première direction est en forme d'arc et dans laquelle ledit second élément est monté sur ledit premier élément pour effectuer un mouvement pivotant par rapport à celui-ci.

7. Combinaison selon la revendication 4, dans laquelle l'un desdits premier et second éléments comporte une fente (14) s'étendant dans ladite première direction, et dans laquelle un boulon de serrage (16) est monté dans ladite fente et est vissé dans l'autre desdits premier et second éléments pour fixer ensemble lesdits éléments lorsque l'ajustement a été achevé.

8. Combinaison selon la revendication 4, dans laquelle ladite partie de l'outil d'ajustement comprend une partie d'extrémité cylindrique (41) s'adaptant pour ladite rotation à frottement dans ledit alésage, ladite partie d'extrémité est évidée pour définir une partie intérieure creuse en forme conique présentant une surface de contre-came à dilatation s'ouvrant de manière divergente vers ladite extrémité de celle-ci, ladite partie d'extrémité est longitudinalement fendue pour permettre une dilatation radiale de celle-ci pour engager par frottement les parois dudit alésage dans ledit premier élément afin de fournir ladite action de fixation de celui-ci, et un élément de came conique coïncidant (42) est prévu dans ladite partie intérieure creuse pour entraîner ladite dilatation desdites parties d'extrémité, ledit élément de came sous l'action d'un ressort dans la direction source de la dilatation et étant manuellement déplaçable dans la direction opposée pour un repli temporaire radial de ladite partie d'extrémité pour permettre une rotation dans ledit alésage.

9. Combinaison selon la revendication 8, dans laquelle ledit outil d'ajustement définit un alésage central (33) s'étendant depuis ladite partie intérieure creuse en forme de cône vers l'autre extrémité dudit élément d'ajustage, et ledit élément de came comporte un arbre allongé (34) s'étendant vers ledit alésage central et faisant saillie de ladite autre extrémité dudit élément d'ajustage pour définir un bouton manuellement enfonçable (36) pour déplacer ledit élément de came dans ladite direction opposée pour permettre temporairement ladite rotation dans ledit alésage.

10. Combinaison selon la revendication 9, dans laquelle ledit outil d'ajustement est également retirable et insérable manuellement dans ledit alésage lorsque ledit bouton est manuellement enfoncé.

11. Outil pour effectuer l'ajustement positionnel de l'appareil comprenant deux éléments ajustables de manière positionnellement relative dont un premier élément (12) comporte une partie d'engagement (21) et est déplaçable pour un ajustement par rapport à l'autre élément (11), lequel comporte une ouverture (22) adjacente à la partie d'engagement, l'outil (31) comprenant un corps dont une partie terminale (41) est insérable dans et peut tourner dans l'ouverture, le corps supportant un moyen d'engagement (32) pour engager ladite partie d'engagement pour un ajustement positionnel des éléments par rotation du corps de l'outil, caractérisé en ce que l'outil est prévu pour se dilater latéralement de manière élastique pour engager solidement l'ouverture par action de blocage d'un élément d'actionnement (34, 42) qui s'étend le long dudit corps et est déplaçable contre une sollicitation pour libérer ladite action de blocage.

12. Outil selon la revendication 11, dans lequel le corps est creux et l'élément d'actionnement comprend une tige (3-4) s'étendant à l'intérieur du corps.

13. Outil selon la revendication 11 ou 12, dans lequel la partie terminale (39) est fendue pour permettre la dilatation latérale de celui-ci et dans lequel l'élément d'actionnement comporte une partie conique (42) engageant l'intérieur de ladite partie terminale.

14. Outil selon l'une quelconque des revendications 11 à 13, dans lequel l'élément d'actionnement se termine, de manière éloignée de ladite partie terminale, en un bouton d'actionnement (36).

15. Outil selon l'une quelconque des revendications 11 à 14, dans lequel la sollicitation est assurée par un ressort à pression (44) entre l'élément d'actionnement et le corps.

FIG_1

FIG_2

FIG_3